# EUROPÄISCHE PATENTSCHRIFT

(11) **EP 0 545 183 B1**
(45) Veröffentlichungstag und Bekanntmachung des Hinweises auf die Patenterteilung: **22.12.1999**
(21) Anmeldenummer: 92119864.4
(22) Anmeldetag: 21.11.1992
(51) Int. Cl.: G06F 7/58, H04L 25/49

(54) **Schaltungsanordnung zum Erzeugen von binären Pseudo-Zufallsfolgen**
Circuit arrangement for the production of binary pseudo random sequences
Circuit pour la production de séquences binaires pseudo-aléatoires

(30) Priorität: 30.11.1991 DE 4139630
(43) Veröffentlichungstag der Anmeldung: 09.06.1993
(73) Patentinhaber: ALCATEL, 75008 Paris (FR)
(72) Erfinder: Wettengel, Heinz, W-7257 Ditzingen 5 (DE)
(74) Vertreter: Schätzle, Albin, Dipl.-Phys.

(56) Entgegenhaltungen:
- EP-A- 0 150 862
- EP-A- 0 301 383
- GB-A- 1 591 805
- SIEMENS FORSCHUNGS- UND ENTWICKLUNGSBERICHTE Bd. 3, Nr. 4, 1974, BERLIN DE Seiten 218 - 224 K.H.MÖRMANN 'ERZEUGUNG VON BINÄREN QUASI-ZUFALLSFOLGEN HOHER TAKTFREQUENZ DURCH MULTIPLEXEN'

## Beschreibung

Die Erfindung betrifft eine Schaltung zum Erzeugen von binären Pseudo-Zufallsfolgen gemäß dem Oberbegriff des Anspruchs 1 und einen mit einer solchen Schaltungsanordnung versehenen Scrambler.

Schaltungsanordnungen zum Erzeugen binären Pseudo-Zufallsfolgen sind bekannt. Unter einer binären Pseudo-Zufallsfolge wird eine binäre Symbolfolge verstanden, die in sich keine Regelmäßigkeit aufweist und eine endliche Länge von q Symbolen hat. Solche Pseudo-Zufallsfolgen werden in der Regel in einem Schieberegister-Wortgenerator mit Rückkopplung zyklisch erzeugt, dabei wird durch die Art der Rückkopplung das Bildungsgesetz der Pseudo-Zufallsfolge definiert. Aus PROC. IEE, Vol. 111, No. 11, Nov. 1964, Seiten 1803 bis 1806 ist eine Schaltungsanordnung bekannt, in der eine Pseudo-Zufallsfolge in einem rückgekoppelten Schieberegister erzeugt wird. Das Schieberegister weist dabei n Speicherzellen auf, die die Erzeugung von Pseudo-Zufallsfolgen mit der Länge q = 2ⁿ - 1 ermöglichen.

Für verschiedene Anwendungen, z.B. in der Verwendung der Schaltungsanordnung in einem parallel arbeitenden Scrambler ist es nun unter gegebenen Voraussetzungen erforderlich, gleichartige, aber zueinander phasenverschobene Pseudo-Zufallsfolgen parallel zu erzeugen. Für den Fall, daß in einer Schaltungsanordnung mit einem m-stufigen Schieberegister mehr als m gleichartige aber zueinander phasenverschobene Pseudo-Zufallsfolgen erzeugt werden sollen, können die Abgriffe an einzelnen Speicherzellen des Schieberegisters mit einem Netzwerk verbunden werden. In dem Netzwerk werden die abgegriffenen Pseudo-Zufallsfolgen in logischen Verknüpfungselemente miteinander Modulo-2-addiert, wodurch weitere gleichartige Pseudo-Zufallsfolgen mit anderer Phasenverzögerung erzeugt werden. Unterschiedliche Kombinationsmöglichkeiten sind in der oben genannten Schrift ausführlich beschrieben.

Soll nun auf die oben genannte Weise eine große Anzahl gleichartiger phasenverschobener Pseudo-Zufallsfolgen erzeugt werden, erfordert dies ein Netzwerk in dem einzelne Pseudo-Zufallsfolgen während einer Taktperiode zwei oder mehrmals Modulo-2-addiert werden müssen, wodurch die minimale Taktzeit durch die Laufzeit in den logischen Verknüpfungselementen bestimmt wird.

In der Patentschrift UK 1 591 805 wird ein digitaler Scrambler beschrieben. Er enthält acht von einer gemeinsamen Taktquelle getaktete Delay-Elemente (Speicherglieder), die ein Eingangssignal jeweils um einen vorgegebenen Wert zeitlich verzögern. Jeweils zwei der Delay-Elemente sind über einen von insgesamt acht Modulo-2-Addieren (XOR-Elemente) verbunden, so daß acht Ausgangssignale erhalten werden, die jeweils das Eingangssignal in verwürfelter Form darstellen. Die acht Ausgangssignale werden anschließend von einem dem Scrambler nachgeschalteten Multiplexer verschachtelt. Ohne Eingangssignal erzeugt der Scrambler an seinen acht Ausgängen acht gleichartige, zueinander phasenverschobene binäre Pseudo-Zufallsfolgen. Die Pseudo-Zufallsfolgen haben die Länge 2^{N}-1, wobei N die Anzahl der Verzögerungselemente ist, also acht. Die Schaltung kann somit als Wortgenerator eingesetzt werden, wobei der Einsatz dadurch begrenzt ist, daß bei einer Länge der Zufallsfolge von 2^{N}-1 nur N gleichartige, zueinander phasenverschobene Pseudo-Zufallsfolgen erzeugt werden können. Es wird in der Patentschrift erwähnt, daß unter Verwendung eines nachgeschalteten Schieberegisters weitere phasenverschobene Pseudo-Zufallsfolgen erzeugt werden könnten, daß dies jedoch ein sehr langes Schieberegister erfordern würde (erforderliche Länge 2^{N}-1).

Aus dem Artikel "Erzeugung von binären Quasi-Zufallsfolgen hoher Taktfrequenz durch Multiplexen" von K. Möhrmann, Siemens Forschungs- und Entwicklungsbericht Band 3 (1997) Nr. 4 Seiten 218-224, ist eine Schaltung bekannt, die durch Ineinanderschachteln von q gleichartigen, zueinander phasenverschobenen Pseudo-Zufallsfolgen eine Pseudo-Zufallsfolge maximaler Länge bezogen auf eine Taktfrequenz von 100 MHz erzeugt. Die q gleichartigen, zueinander phasenverschobenen Pseudo-Zufallsfolgen der Länge 2^{N}-1 werden mit einem Schieberegister-Generator mit N Stufen und einem nachgeschalteten Netzwerk aus q logischen Verknüpfungsgliedern zur Modulo-2-Addition erzeugt. Hierbei besteht jedoch die vorstehend beschriebene Problematik, daß, wenn mehr als N phasenverschobene Pseudo-Zufallsfolgen erzeugt werden sollen, d.h. q>N , mehrere Verknüpfungsglieder in Reihe geschaltet werden müssen, was wiederum die erreichbare Taktfrequenz aufgrund der Laufzeit in dem Verknüpfungsgliedern beschränkt.

Der Erfindung liegt nun die Aufgabe zugrunde eine Schaltungsanordnung zum parallelen Erzeugen von gleichartigen, phasenverschobenen binären Pseudo-Zufallsfolgen zu schaffen, in der die minimale Taktperiode unabhängig von der Anzahl der durchzuführenden Modulo-2-Additionen, zur Erzeugung von Pseudo-Zufallsfolgen mit bestimmter Phasenverzögerung, ist.

Die Aufgabe wird durch die Merkmale des Anspruchs 1 gelöst.

Vorteilhafte Ausgestaltungen sind den abhängigen Ansprüchen zu entnehmen. Ein Ausführungsbeispiel der Erfindung wird im folgenden anhand der Fig. 1 bis 7 und der Tabellen 1 und 2 beschrieben. Es zeigen:
- Fig. 1: ein Blockschaltbild eines erfindungsgemäßen Scramblers,
- Fig. 2: ein Wortgenerator zur Erzeugung von Pseudo-Zufallsfolgen, wie sie in der CCITT-Empfehlung G.709 2.4 vorgeschlagen werden,
- Fig. 3: ein Wortgenerator nach Fig. 1 mit Setzanschlüssen und einem Teil eines Netzwerkes,
- Fig. 4: ein Teil eines Netzwerkes zur Erzeugung weiterer gleichartiger Pseudo-Zufallsfolgen mit unterschiedlicher Phasenbeziehung, der mit Pseudo-Zufallsfolgen des Wortgenerators versorgt wird,
- Fig. 5: ein zweiter Teil des Netzwerkes, der mit Pseudo-Zufallsfolgen des Wortgenerators und des ersten Teils versorgt wird,
- Fig. 6: ein dritter Teil des Netzwerkes, der mit Pseudo-Zufallsfolgen des Wortgenerators, des ersten und des zweiten Teils des Netzwerkes versorgt wird,
- Fig. 7: ein Scrambler, in dem ein 32 Bit-Datenwort mit 32 gleichartigen phasenverschobenen Pseudo-Zufallsfolgen bitweise verwürfelt wird,
- Tab. 1: eine mit einem Wortgenerator gemäß den Fig. 2 und 3 erzeugte Pseudo-Zufallsfolge mit der Länge q = 127 und sechs weiteren jeweils um 1 Bit phasenverschobene Pseudo-Zufallsfolgen, und
- Tab. 2: die Phasenlage der im Ausführungsbeispiel genannten Pseudo-Zufallsfolgen in Bezug auf die Phasenlage der Pseudo-Zufallsfolge Nr. 1 und deren Bezeichnung.

Im Ausführungsbeispiel wird eine Schaltungsanordnung zum parallelen Erzeugen von gleichartigen, phasenverschobenen binären Pseudo-Zufallsfolgen in einem sogenannten Scrambler eingesetzt. Scrambler sind Schaltungen, die einen Eingangsdatenstrom verwürfeln, so daß längere 0- oder 1-Folgen nur mit geringer Wahrscheinlichkeit auftreten und die Auftrittswahrscheinlichkeit von 0 und 1 gleich groß ist. Sie dienen hauptsächlich dazu, in taktregenerierenden Schaltungen genügend Flankenwechsel zu gewährleisten, es sind aber auch Anwendungen bekannt, wo Scrambler zur Verschlüsselung von Daten verwendet werden. Descrambler sind Schaltungen, die aus den vom Scambler verwürfelten Daten wieder die Originaldaten herstellen. Generatoren von Pseudo-Zufallsfolgen werden zur Erzeugung von Testmustern eingesetzt, welche z.B. Meß- und Überwachungszwecken in Übertragungseinrichtungen dienen können.

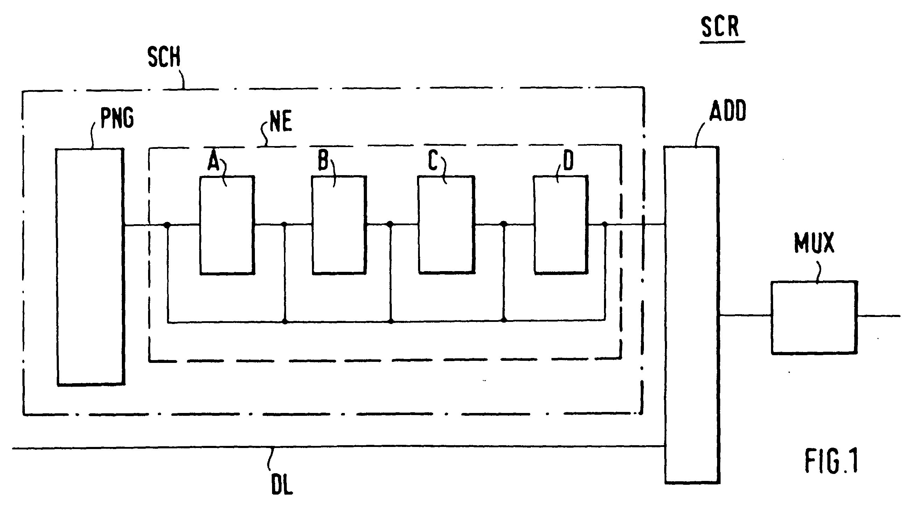

In Fig. 1 ist das Ausführungsbeispiel als Blockschaltbidl gezeigt. Ein additiver Scrambler SCR enthält eine Schaltungsanordnung SCH mit einem Wortgenerator PNG, dem ein Netzwerk NE nachgeschaltet ist. Das Netzwerk NE besteht aus vier Teilen A bis D in denen aus schon bestehenden Pseudo-Zufallsfolgen weitere Pseudo-Zufallsfolgen erzeugt und diese weiteren Pseudo-Zufallsfolgen für eine Taktperiode zwischengespeichert werden. Aus den zwischengespeicherten Pseudo-Zufallsfolgen werden in der nächsten Taktperiode zum Teil wiederum Pseudo-Zufallsfolgen erzeugt und/oder an einen Ausgang der Schaltungsanordnung SCH geführt. In einem Modulo-2-Addierer ADD werden die in der Schaltungsanordnung SCH erzeugten parallel anliegenden Pseudo-Zufallsfolgen und die ebenfalls an einer Datenleitung DL parallel anliegenden Teildatenströme miteinander verknüpft und in einem Muliplexer MUX parallel-seriell gewandelt.

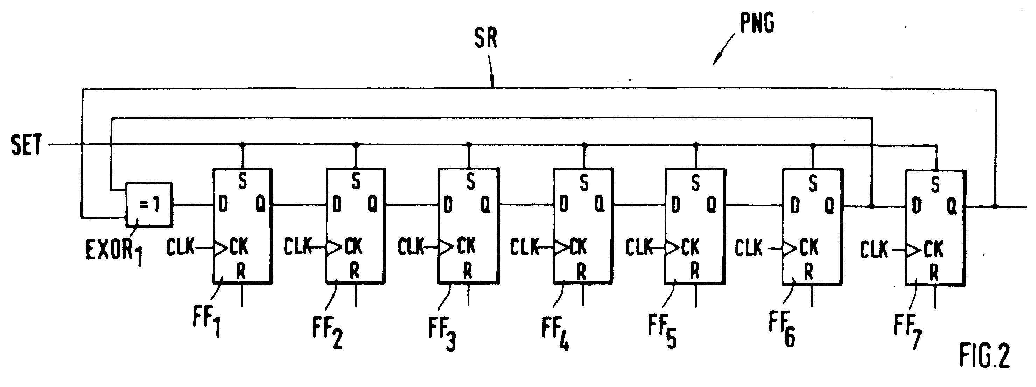

Aus der CCITT-Empfehlung G.709 2.4 und Fig. 2.10 ist ein Scrambler bekannt, der in der Lage ist einzelne zu verwürfelnde Datenströme mit einer Pseudo-Zufallsfolge zu verwürfeln, die nach dem Bildungsgesetz Dᵢ = 1 ⊕ D⁶ ⊕ D⁷ generiert wird. Eine solche Pseudo-Zufallsfolge wird in einem rückgekoppelten siebenstufigen Schieberegister erzeugt. Zur Rückkopplung werden, wie in Fig. 2 dargestellt, die prinzipell auch der Fig. 2.10 der CCITT-Empfehlung G.709 entspricht, die Speicherzellen FF₆ und FF₇ in einem exclusiven ODER-Gatter EXOR₁ (im folgenden EXOR-Gatter genannt) miteinander verknüpft und auf den Eingang ESR des Schieberegisters SR geführt. Dᵢ ist dabei der am Eingang anliegende, D⁶ der in der Speicherzelle FF₆ und D⁷ der in der Speicherzelle FF₇ anliegende binäre Wert.

In Fig. 2 ist der Wortgenerator PNG aus sieben D-Flip-Flops FF₁ bis FF₇ und einem EXOR-Gatter EXOR₁ aufgebaut. Die D-Flip-Flops stellen die Speicherzellen des Schieberegisters SR dar und sind jeweils über die Q-Ausgänge und die D-Eingänge miteinander in Reihe geschaltet. Die Q-Ausgänge der D-Flip-Flops FF₆ und FF₇ sind auf die Eingänge des EXOR-Gatters EXOR₁ geführt und über den Ausgang des EXOR-Gatters EXOR₁ mit dem D-Eingang des ersten Flip-Flops FF₁ verbunden. Über eine Setzleitung SET können die Setzeingänge S der Flip-Flops FF₁ bis FF₇ auf 1 gesetzt werden.

Die Erfindung wird an einem Scrambler beschrieben, der zum Verwürfeln von Datenströmen vorgesehen ist, die nach der synchronen digitalen Hierarchie SDH gemäß der CCITT-Empfehlungen G.707 bis G.709 aufgebaut sind und übertragen werden. Im Ausführungsbeispiel soll der Scrambler einen STM-16-Rahmen mit einer Bitfolgefrequenz von 2,48832 GBit/s verwürfeln. Das Verwürfeln erfolgt für ein 32 Bit breites Wort bei einer Worttaktfrequenz von 77,76 MHz wortweise.

Die Erfindung eignet sich besonders zum Einsatz in dem oben genannten Scrambler ist aber auf diesen Einsatz nicht beschränkt. Vorteile beim oben genannten Einsatz liegen darin, daß trotz eines hohen Parallelisierungsgrades Teildatenströme mit hoher Bitfolgefrequenz verwürfelt werden können.

Die erfindungsgemäße Schaltungsanordnung SCH kann grundsätzlich auch in einem Descrambler, oder einer anderen Vorrichtung eingesetzt werden, in der Pseudo-Zufallsfolgen benötigt werden.

Die erfindungsgemäße Schaltungsanordnung läßt sich vorteilhafterweise als CMOS-Gate-Array realisieren, eignet sich aber auch zur Realisierung in jeder anderen Technologie, wie z.B. in GaAs-Telchnologie.

Der in Fig. 2 gezeigte Wortgenerator ist für einen seriellen, additiven Scrambler bestimmt und erzeugt eine Pseudo-Zufallsfolge gemäß der CCITT-Empfehlung G.709 2.4. Bei einem parallelen additiven Scrambler muß berücksichtigt werden, daß ein zu verwürfelnder Datenstrom zuerst in einem Seriell-Parallel-Wandler in parallele Teildatenströme mit niedrigerer Bitfolgefrequenz gewandelt wird, und jeder Teildatenstrom für sich verwürfelt wird und die gesamten verwürfelten Teildatenströme in einem Multiplexer parallel seriell gewandelt werden. Es ist dabei zu beachten, daß der nun wieder seriell gewandelte Teildatenstrom nach dem Bildungsgesetz der CCITT-Empfehlung G.709 2.4 verwürfelt sein muß.

Im Ausführungsbeispiel wird der serielle Datenstrom aus 32 parallelen Teildatenströmen, durch Multiplexen parallel-seriell-gewandelt. Hierzu werden zwei benachbarte parallele Teildatenströme mit jeweils einer gleichartigen Pseudo-Zufallsfolge verwürfelt, wobei die Pseudo-Zufallsfolgen für zwei benachbarte Teildatenströme zu einander um 4 Bit phasenverschoben sind. Der durch Multiplexen erzeugte serielle Datenstrom wird auf diese Weise gemäß der oben genannten CCITT-Empfehlung verwürfelt.

Da der Wortgenerator PNG im Ausführungsbeispiel ein 7-stufiges Schieberegister SR aufweist, das aus D-Flip-Flops aufgebaut ist, ist er in der Lage, Pseudo-Zufallsfolgen mit einer Länge von 127 Symbolen zu erzeugen.

Der Wortgenerator PNG nach Fig. 2 erzeugt parallel 7 gleichartige Pseudo-Zufallsfolgen, wobei am Ausgang Q des D-Flip-Flops FF₁ eine erste Pseudo-Zufallsfolge abgegriffen wird, die im folgenden mit Folge Nr. 1 bezeichnet wird. Sämtliche nachfolgend genannte Phasenverschiebungen werden als Phasenverzögerung Ai bezeichnet, wobei i die Verzögerung in Taktperioden gegenüber der Folge 1 darstellt. Die an den Ausgängen Q der nachfolgenden D-Flip-Flops FF₂ bis FF₇ anliegenden Pseudo-Zufallsfolgen weisen jeweils zueinander eine Phasenverzögerung von einem Bit und auf die Folge 1 bezogen eine Phasenverzögerung A₂ bis A₇ auf. Durch die Gesamtlänge einer Pseudo-Zufallsfolge von 127 Bits lassen sich, wie im folgenden gezeigt wird, 127 gleichartige Pseudo-Zufallsfolgen erzeugen. In Tabelle 1 sind die an den Ausgängen Q der D-Flip-Flops FF₁ bis FF₇ anliegenden Pseudo-Zufallsfolgen mit den Phasenverzögerungen A0 bis A6 über die Gesamtlänge von 127 Bits oder temporär gesehen über eine Periode von 127 Taktzyklen abgebildet.

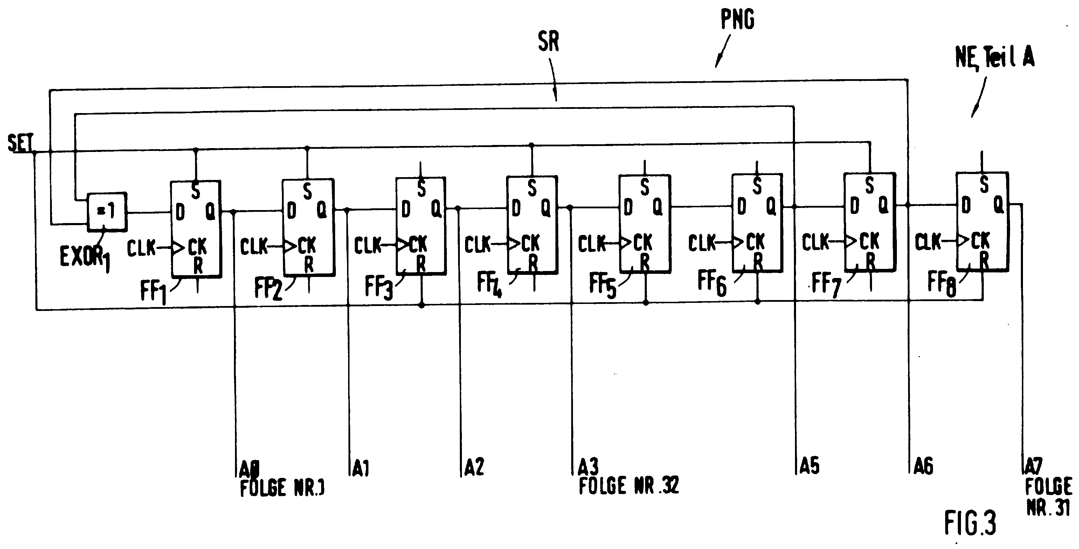

Da im Ausführungsbeispiel lediglich 32 gleichartige Pseudo-Zufallsfolgen benötigt werden, die zueinander jeweils eine Phasenverschiebung von 4 Bit aufweisen, ist die in den Fig. 3 bis 6 abgebildete Schaltungsanordnung zur Erzeugung paralleler gleichartiger Pseudo-Zufallsfolgen nur soweit ausgebildet, daß sie 32 in der Tabelle 2 beschriebene Pseudo-Zufallsfolgen erzeugt. Zunächst sei nur auf die Spalten 1 und 2 der Tabelle 2 verwiesen, in der 32 Pseudo-Zufallsfolgen durch ihre Phasenlage gegenüber der Folge Nr. 1 definiert sind. Spalte 3 ist zu entnehmen, daß die Folgen Nr. 1 und 32 direkt am Schieberegister SR mit einer Phasenverzögerung A0 und A3 abgegriffen werden können.

Zur Erzeugung der weiteren 30 Folgen, den Folgen 2 bis 31 ist das Schieberegister SR wie in Fig. 3 bis 6 gezeigt mit einem Netzwerk NE verbunden.

In Fig. 3 ist das Schieberegister SR des Wortgenerators PNG aus Fig. 1 um ein Flip-Flop FF₈ verlängert. Das Flip-Flop FF₈ ist funktionell nicht dem Wortgenerator PNG zuzuordnen, sondern stellt den Teil A des Netzwerks NE dar. Das Flip-Flop FF₈ erzeugt als getaktetes Verzögerungsglied die Folge Nr. 31 mit einer Phasenverzögerung A7, wie dies der Tab. 2 zu entnehmen ist. Die an den Ausgängen Q der Flip-Flops FF₁ bis FF₇ anliegenden Folgen werden im folgenden als Pseudo-Zufallsfolgen der ersten Generation bezeichnet. Die Folge 31 gehört schon zu einer im folgenden als Pseudo-Zufallsfolge der zweiten Generation bezeichneten Gruppe.

Da die Schaltungsanordnung SCH zum Erzeugen 32 gleichartiger parallel jeweils um 4 Bit phasenverschobener Pseudo-Zufallsfolgen herangezogen wird, werden die D-Flip-Flops FF₁ bis FF₇ des Wortgenerators PNG und das Netzwerk NE wie in den Fig. 3 bis 6 gezeigt, derart gesetzt, daß ein über die Setzleitung SET anliegender Setzimpuls, ein Bitmuster erzeugt, von dem ausgehend die in Tabelle 2 aufgeführten Pseudo-Zufallsfolgen mit der in ebenfalls Tabelle 2 gezeigten Phasenbeziehung entsteht. D.h., wenn die Setzleitung SET am Setzeingang S anliegt, wird das entsprechende D-Flip-Flop FF mit einer logischen 1 und wenn die Setzleitung mit dem Setzimpuls Setzeingang R eines D-Flip-Flops verbunden ist, wird dasjenige Flip-Flop mit einer logischen 0 gesetzt.

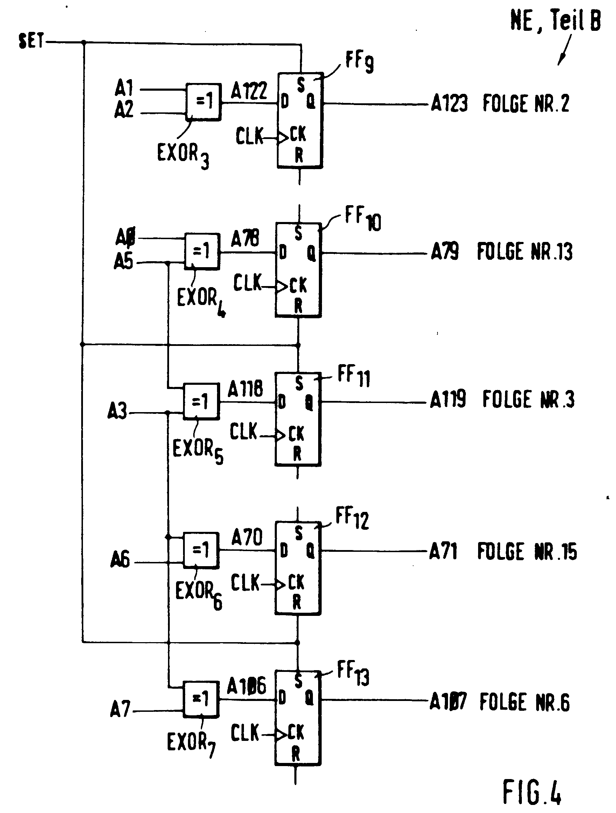

Die weiteren Folgen der zweiten Generation, die Folgen Nr. 2, Nr. 13, Nr. 3, Nr. 15, und Nr. 6, werden in dem in Fig. 4 gezeigten Teil B des Netzwerks NE erzeugt. Der Teil B besteht aus fünf Exclusive-ODER-Gattern EXOR₃ bis EXOR₇ und fünf D-Flip-Flops FF₉ bis FF₁₃, die wie in Fig. 4 gezeigt, untereinander, mit dem Wortgenerator PNG, dem Teil A und den nachfolgend beschriebenen Teilen C und D des Netzwerks NE verknüpft sind.

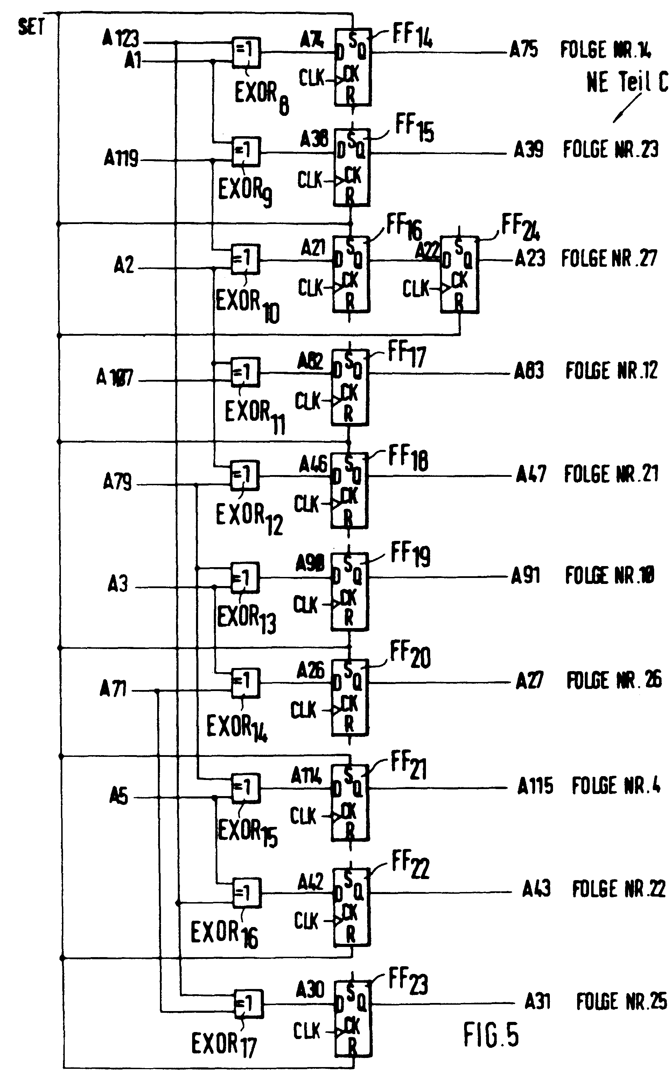

Eine dritte Generation von Pseudo-Zufallsfolgen, die Folgen Nr. 14, Nr. 23, Nr. 27, Nr. 12, Nr. 21, Nr. 10, Nr. 26, Nr. 4, Nr. 22 und Nr. 25 wird im in Fig. 5 abgebildeten Teil C des Netzwerks NE erzeugt. Der Teil C besteht aus 10 Exclusive-ODER-Gattern EXOR₈ bis EXOR₁₇ und 11 D-Flip-Flops FF₁₄ bis FF₂₄, die wie in Fig. 5 gezeigt, untereinander, mit dem Wortgenerator PNG und den anderen Teilen A, B und D des Netzwerks NE verknüpft sind.

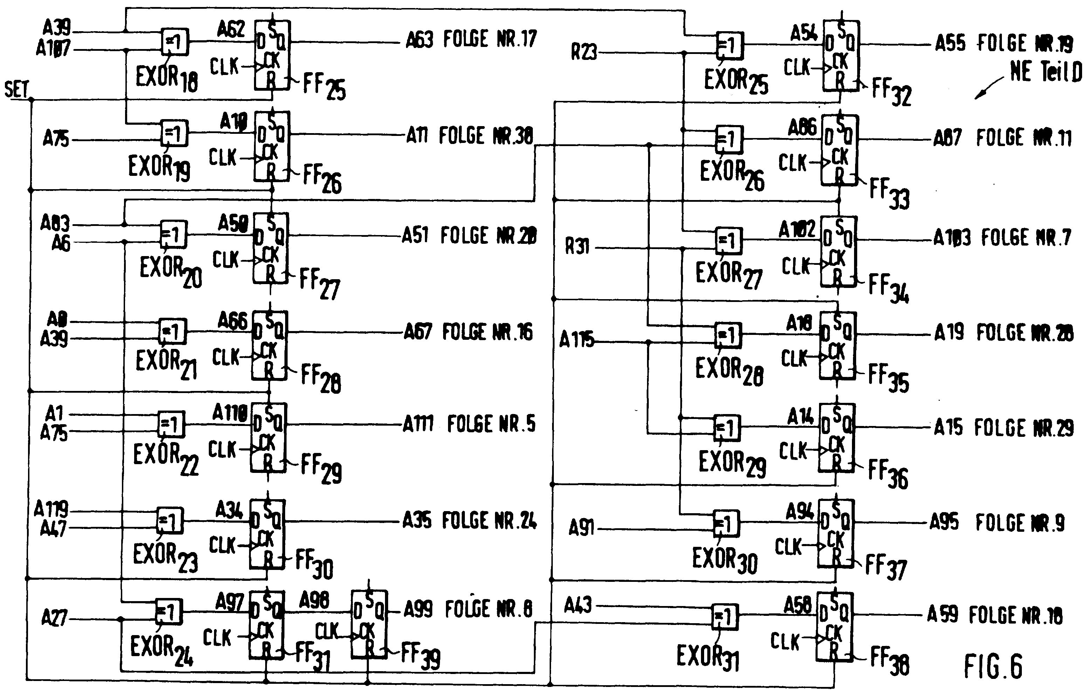

Eine vierte Generation von Pseudo-Zufallsfolgen, die Folgen Nr. 17, Nr. 30, Nr. 20, Nr. 16, Nr. 5, Nr. 24, Nr. 8, Nr. 19, Nr. 11, Nr. 7, Nr. 28, Nr. 29, Nr. 9 und Nr. 18 werden in dem in Fig. 6 gezeigten Teil D des Netzwerks erzeugt. Teil D besteht aus 14 Exclusive-ODER-Gattern EXOR₁₈ bis EXOR₃₁ und 15 D-Flip-Flops FF₂₅ bis FF₃₉, die wie in Fig. 6 gezeigt untereinander und mit dem restlichen Teil der Schaltungsanordnung verbunden sind.

Die Verbindungen zwischen den einzelnen Teilen A, B, C und D des Netzwerks NE und dem Wortgenerator PNG ist durch die in den Figuren angezeigten Werte Ai für die Verzögerung der an den jeweiligen Anschlüssen anliegenden Pseudo-Zufallsfolgen gegeben.

Bezeichnend für das Netzwerk NE ist es, daß die 32 Pseudo-Zufallsfolgen Nr. 1 bis Nr. 32 aus Tab. 2 grundsätzlich durch die an und für sich bekannten Schiebe- und Addiereigenschaften von Pseudo-Zufallsfolgen und durch Modulo-2-Addition von zwei zueinander phasenverschobenen Pseudo-Zufallsfolgen zu einer dritten, eine andere Phasenlage aufweisenden, gleichartigen Pseudo-Zufallsfolge erzeugt werden.

Aus Pseudo-Zufallsfolgen der ersten Generation können nun mit anderen bereits in vorhergehenden Taktperioden erzeugten Pseudo-Zufallsfolgen durch Modulo-2-Addition weitere Pseudo-Zufallsfolgen erzeugt werden.

Durch Kombination der Folgen der zweiten Generation untereinander und mit Folgen der ersten Generation lassen sich Folgen der dritten Generation erzeugen. Durch entsprechende Kombination lassen sich auch Folgen weiterer Generationen erzeugen. Beim dem im Ausführungsbeispiel verwendeten siebenstufigen Schieberegister müssen vier Generationen von Zufallsfolgen erzeugt werden um 32 gleichartige phasenverschobene Pseudo-Zufallsfolgen zu erhalten.

Um nun eine Pseudo-Zufallsfolge der vierten Generation zu erhalten, müssen bis zu drei Modulo-2-Additionen durchgeführt werden. Im Ausführungsbeispiel geschieht dies dadurch, daß eine schon bestehende Pseudo-Zufallsfolge auf den Eingang eines Exclusive-ODER-Gatters geführt und in diesem Exclusive-ODER-Gatter mit einer anderen Pseudo-Zufallsfolge Modulo-2-addiert wird. Das Ergebnis der Modulo-2-Addition wird in einem nachgeschalteten D-Flip-Flop zwischengespeichert.

Ist nun eine Pseudo-Zufallsfolge, z.B. die Folge Nr. 19 zu erzeugen, die erst nach der Durchführung von drei in Serie durchgeführten Modulo-2-Additionen entsteht, ist zu berücksichtigen, daß die Erzeugung drei Taktperioden dauert.

Als Beispiel für die Erzeugung einer Pseudo-Zufallsfolge der vierten Generation wird die Entstehung der Folge 19 beschrieben. Zur Erzeugung der Folge Nr. 19 werden die an den Ausgängen Q der D-Flip-Flops FF₄ und FF₆ anliegenden Folgen mit den Verzögerungen A3 und A5 im EXOR-Gatter EXOR₅ (Teil B) zu einer Folge der zweiten Generation mit einer Phasenverzögerung A118 in einer ersten Taktperiode Modulo-2-addiert. Die Folge mit der Verzögerung A118 wird im D-Flip-Flop FF₁₁ zwischengespeichert und in einer zweiten Taktperiode als Folge mit einer Verzögerung A119 ausgelesen, im Exclusive-ODER-Gatter EXOR₉ (Teil C) mit einer Folge der Verzögerung A1, die direkt aus dem Wortgenerator PNG stammt, Modulo-2-addiert, wodurch eine Folge mit der Verzögerung A38 entsteht. Die Folge mit der Verzögerung A38 wird im D-Flip-Flop FF₁₅ zwischengespeichert.

In einer dritten Taktperiode liegt am Ausgang Q des D-Flip-Flops FF₁₅ eine Folge mit der Verzögerung A39 an, aus der, durch Modulo-2-Addition mit einer Folge der Verzögerung A23 im Exclusive-ODER-Gatter EXOR₂₅ (Teil D) eine Folge mit der Verzögerung A54 der dritten Generation entsteht. Die Folge mit der Verzögerung A54 wird in das D-Flip-Flop FF₃₂ eingeschrieben. In einer vierten Taktperiode wird eine Pseudo-Zufallsfolge mit der Verzögerung A55 ausgelesen, diese Folge stellt gemäß Tab. 2 die Folge Nr. 19 dar.

Damit in der dritten Taktperiode am Exclusive-ODER-Gatter EXOR₂₅ eine Folge mit der Verzögerung A23 zur Verfügung steht, werden schon in der ersten Taktperiode im Exclusive-ODER-Gatter EXOR₁₀ (Teil C) die Folgen mit der Verzögerung A119 und A2 Modulo-2-addiert und das Ergebnis, eine Folge mit der Verzögerung A21 in das D-Flip-Flop FF₁₆ eingeschrieben. In der zweiten Taktperiode wird die in D-Flip-Flop FF₁₆ zwischengespeicherte Folge mit der Verzögerung A22 an das D-Flip-Flip FF₂₄ weitergeschoben, wodurch in der dritten Taktperiode eine Folge mit der Verzögerung A23, wie oben beschrieben mit der Folge der Verzögerung A39 im Exclusive-ODER-Gatter EXOR₂₅ Modulo-2-addiert wird.

Im Ausführungsbeispiel werden zwei Mechanismen zur Erzeugung gleichartiger aber phasenverschobener Pseudo-Zufallsfolgen herangezogen. Einmal wird eine Pseudo-Zufallsfolge lediglich unter Verwendung eines Verzögerungsgliedes FF₈, FF₂₄ und FF₃₉ geführt und eine Verzögerung um ein Bit erreicht. Im zweiten Fall wird durch Modulo-2-Addition zweier Pseudo-Zufallsfolgen eine Pseudo-Zufallsfolge mit neuer Phasenlage geschaffen.

Das wesentliche der Erfindung ist nun, daß im Netzwerk NE durch Modulo-2-Addition erzeugte Pseudo-Zufallsfolgen in einem D-Flip-Flop FF₈, ..., FF₃₈ zwischengespeichert werden und so zur Erzeugung neuer Zufallsfolgen höherer Generationen durch Modulo-2-Addition in der nächsten Taktperiode sofort zur Verfügung stehen. Bei der Berechnung der Folgen müssen hierzu Zwischengenerationen von Zufallsfolgen, z.B. A54, A86, A102, A18, A14, A94, A58 erzeugt werden, die dann erst während der nächsten Taktperiode die gewünschte Phasenverschiebung, z.B. A55, A87, A103, A19, A15, A95 und A59 aufweisen.

Das gezeigte Ausführungsbeispiel ist so ausgelegt, daß es eine möglichst kurze Taktperiode ermöglicht, da während einer Taktperiode lediglich eine Modulo-2-Addition in Serie durchgeführt wird. Es sind durchaus auch Anwendungen denkbar, bei denen es von Vorteil ist, zwei Modulo-2-Additionen in Serie während einer Taktperiode durchzuführen. Dies hätte dann allerdings eine längere minimale Taktperiode zur Folge.

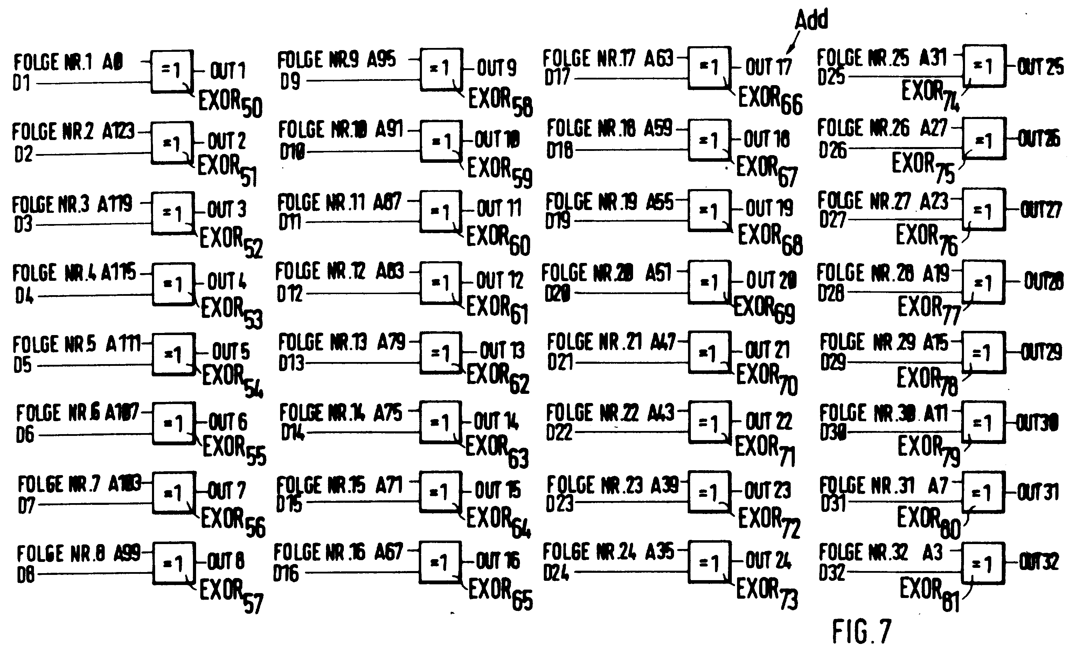

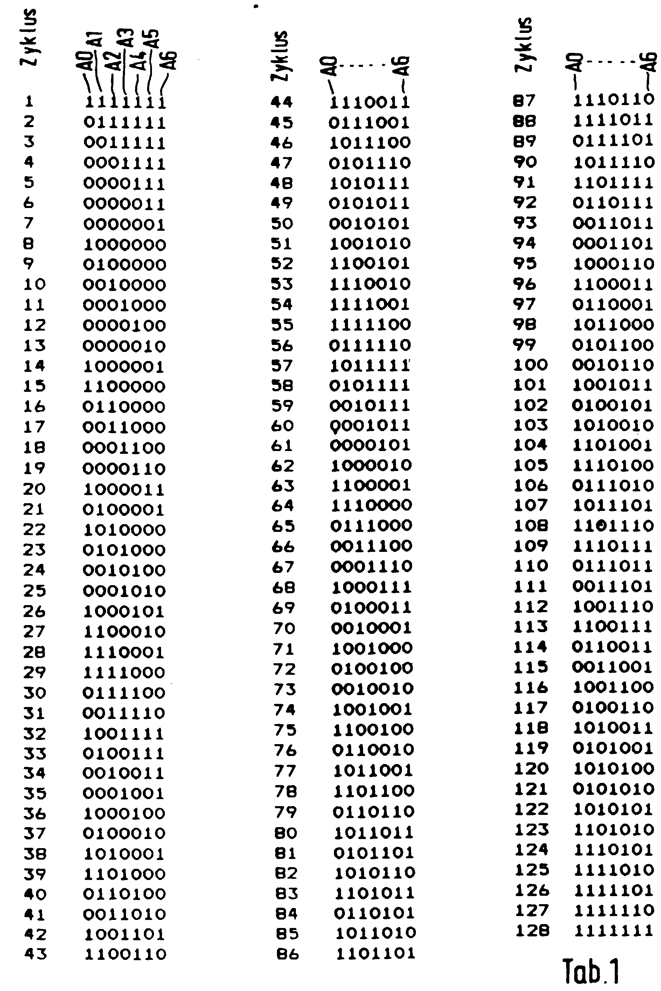

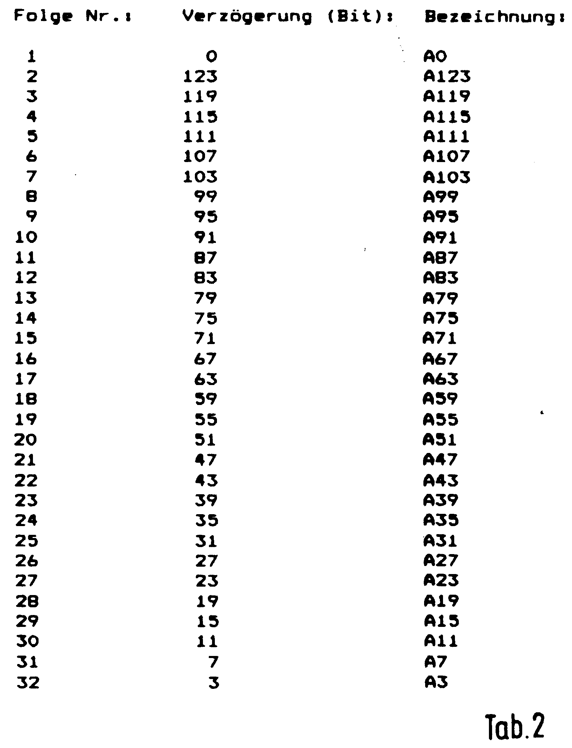

In Fig. 7 ist die Schaltungsanordnung SCH mit den Ausgängen, an denen die Folgen 1 bis 32 anliegen mit 32 parallelen Exclusive-ODER-Gattern EXOR₅₀ bis EXOR₈₁ einer Modulo-2-Additionseinrichtung ADD verbunden. Am jeweils zweiten Eingang der 32 Exclusive-ODER-Gatter EXOR₅₀ bis EXOR₈₁ liegen jeweils ein zu verwürfelnder Teildatenstrom D1 bis D32 an. Durch die Verknüpfung der Schaltungsanordnung SCH mit den Exclusive-ODER-Gattern EXOR₅₀ bis EXOR₈₁ ist die Schaltungsanordnung zu einem parallelen additiven Scrambler mit einer Breite von 32 Bit ergänzt. Die Modulo-2-Additionseinrichtung ADD weist 32 Ausgänge OUT1 bis OUT32 auf, die auf den Multiplexer MUX geführt sind.

## Patentansprüche

1. Schaltungsanordnung (SCH) zum parallelen Erzeugen von gleichartigen, zueinander phasenverschobenen binären Pseudo-Zufallsfolgen,
- mit einem Wortgenerator (PNG), der binäre Pseudo-Zufallsfolgen erzeugt und m Ausgänge (A0-A7) aufweist, an denen jeweils gleichartige, zueinander phasenverschobene Pseudo-Zufallsfolgen anliegen,
- mit einem dem Wortgenerator (PNG) nachgeschalteten Netzwerk (NE), in dem in logischen Verknüpfungsgliedern (A, B, C, D; EXOR3, ..., EXOR31) aus den im Wortgenerator (PGN) erzeugten Pseudo-Zufallsfolgen durch Modulo-2-Addition weitere Pseudo-Zufallsfolgen erzeugt werden,
**dadurch gekennzeichnet**,
- daß das Netzwerk (NE) in Serie geschaltete logische Verknüpfungsglieder (EXOR3, ..., EXOR31) und getaktete Speicherelemente (FF8, ..., FF38) aufweist, in denen erzeugte Pseudo-Zufallsfolgen zwischengespeichert werden, und zwischen zwei Speicherelementen höchstens ein Verknüpfungselement angeordnet ist und
- daß das Netzwerk (NE) weitere Pseudo-Zufallsfolgen wenigstens teilweise aus den zwischengespeicherten Pseudo-Zufallsfolgen erzeugt, so daß die Schaltungsanordnung (SCH) bei einer Länge q der Pseudo-Zufallsfolgen insgesamt eine Anzahl r gleichartiger phasenverschobener Pseudo-Zufallsfolgen erzeugt, wobei m < r < q ist.

2. Schaltungsanordnung nach Anspruch 1, dadurch gekennzeichnet, daß das Netzwerk (NE) derart ausgebildet ist, daß die Schaltungsanordnung (SCH) eine Anzahl r gleichartiger jeweils um ein Bit verschobene Pseudo-Zufallsfolgen erzeugt.

3. Schaltungsanordnung nach Anspruch 1, dadurch gekennzeichnet, daß der Wortgenerator (PNG) ein Schieberegister (SR) mit sieben Speicherzellen (FF₁, ..., FF₇) aufweist, und die beiden letzten Speicherzellen (FF₆, FF₇), in Schieberichtung betrachtet, über eine exclusive ODER-Verknüpfung (EXOR₁) mit dem Eingang (ESR) des Schieberegisters (SR) rückgekoppelt sind.

4. Schaltungsanordnung nach Anspruch 1, dadurch gekennzeichnet, daß in ihr eine Reihe von 32 jeweils um 4 Bit phasenverschobene Pseudo-Zufallsfolgen erzeugt werden.

5. Schaltungsanordnung nach einem der Ansprüche 1 bis 4, dadurch gekennzeichnet, daß die getakteten Speicherelemente (FF₈, ..., FF₃₈) nach dem FiFo-Prinzip arbeiten und zur Erzeugung einer n-ten-Zufallsfolge in das Speicherelement (FF₁₆, FF₂₄; FF₃₁, FF₃₉) mit einer Tiefe m die (n - m)-te-Zufallsfolge eingeschrieben wird.

6. Schaltungsanordnung nach Anspruch 5, dadurch gekennzeichnet, daß die Speicherelemente (FF₈, ..., FF₃₈) aus einem oder mehreren in Reihe geschalteter bistabilen Kippschaltungen besteht.

7. Schaltungsanordnung nach einem der Ansprüche 1 bis 6, dadurch gekennzeichnet, daß die Pseudo-Zufallsfolgen an den Ausgängen des Wortgenerators (PNG), an den Ausgängen der logischen Verknüpfungsglieder (EXOR₃, ..., EXOR₃₁) und/oder an den Ausgängen der Speicherelemente (FF₈, ..., FF₃₈) abgegriffen werden und diese Abgriffe die Ausgänge der Schaltungsanordnung (SCH) darstellen.

8. Paralleler, additiver Scrambler (SCR) mit einer Schaltungsanordnung (SCH) nach einem der Ansprüche 1 bis 7, dadurch gekennzeichnet, daß ein paralleler Datenstrom bitweise parallel mit Pseudo-Zufallsfolgen unterschiedlicher Phasenlage verwürfelt wird.

## Claims

1. A circuit arrangement (SCH) for the parallel generation of similar, mutually phase-shifted binary pseudo-random sequences
- comprising a word generator (PNG) which generates binary pseudo-random sequences and has m outputs (A0-A7) at which similar, mutually phase-shifted pseudo-random sequences in each case occur and
- comprising a network (NE) arranged downstream of the word generator (PNG) in which, in logic elements (A, B, C, D; EXOR3, ..., EXOR31), further pseudo-random sequences are generated by modulo-2-addition from the pseudo-random sequences generated in the word generator (PGN),
characterised in that
- the network (NE) comprises series-connected logic elements (EXOR3, .., EXOR31) and clock-controlled storage elements (FF8, ..., FF38) in which generated pseudo-random sequences are intermediately stored and at the most one logic element is arranged between two storage elements and
- the network (NE) generates further pseudo-random sequences at least in part from the intermediately stored pseudo-random sequences so that where the pseudo-random sequences have a length q, the circuit arrangement (SCH) generates a total number r of similar, phase-shifted pseudo-random sequences, where m < r < q.

2. A circuit arrangement according to Claim 1, characterised in that the network (NE) is designed such that the circuit arrangement (SCH) generates a number r of similar pseudo-ransom sequences in each case shifted in phase by one bit.

3. A circuit arrangement according to Claim 1, characterised in that the word generator (PNG) comprises a shift register (SR) with seven storage cells (FF₁, ..., FF₇) and the two last storage cells (FF₆, FF₇), considered in the shift direction, are fed-back via an EXCLUSIVE-OR gate (EXOR₁) to the input (ESR) of the shift register (SR).

4. A circuit arrangement according to Claim 1, characterised in that a series of 32 pseudo-random sequences, in each case shifted in phase by 4 bits, are generated therein.

5. A circuit arrangement according to one of Claims 1 to 4, characterised in that the clock-controlled storage elements (FF₈, ..., FF₃₈) operate in accordance with the FiFo principle, and for the generation of a n-th random sequence the (n-m)-th random sequence is input into the storage element (FF₁₆, FF₂₄; FF₃₁, FF₃₉) with a depth m.

6. A circuit arrangement according to Claim 5, characterised in that the storage elements (FF₈, ..., FF₃₈) consist of one or more series-connected bistable trigger circuits.

7. A circuit arrangement according to one of Claims 1 to 6, characterised in that the pseudo-random sequences are tapped at the outputs of the word generator (PNG), at the outputs of the logic elements (EXOR₃, ..., EXOR₃₁) and/or at the outputs of the storage elements (FF₈, ..., FF₃₈) and these taps represent the outputs of the circuit arrangement (SCH).

8. A parallel, additive scrambler (SCR) with a circuit arrangement (SCH) according to one of Claims 1 to 7, characterised in that a parallel data stream is scrambled bit-wise in parallel with pseudo-random sequences having a different phase position.

## Revendications

1. Dispositif de circuit (SCH) pour la production parallèle de séquences binaires pseudo-aléatoires identiques et mutuellement déphasées, comprenant
- un générateur de mot (PNG) qui produit des séquences binaires pseudo-aléatoires et présente m sorties (A0-A7) où respectivement des séquences pseudo-aléatoires identiques et mutuellement déphasées sont présentes,
- un réseau (NE), placé en aval du générateur de mot (PNG), dans lequel, dans des éléments logiques de combinaison (A, B, C, D ; EXOR3, ..., EXOR31), des séquences pseudo-aléatoires supplémentaires sont produites par addition modulo 2 à partir des séquences pseudo-aléatoires produites dans le générateur de mot (PGN),
caractérisé
- en ce que le réseau (NE) présente des éléments logiques de combinaison placés en série (EXOR3, ..., EXOR31) et des éléments de mémoire cadencés (FF8, ..., FF38) dans lesquels des séquences pseudo-aléatoires produites sont tamponnées, et un élément de combinaison au plus est disposé entre deux éléments de mémoire, et
- en ce que le réseau (NE) produit d'autres séquences pseudo-aléatoires au moins partiellement à partir des séquences pseudo-aléatoires tamponnées de sorte que le dispositif de circuit (SCH) avec une longueur q des séquences pseudo-aléatoires produit au total un nombre r de séquences pseudo-aléatoires identiques et déphasées, où m < r < q.

2. Dispositif de circuit selon la revendication 1, caractérisé en ce que le réseau (NE) est réalisé de telle sorte que le dispositif de circuit (SCH) produit un nombre r de séquences pseudo-aléatoires identiques et respectivement décalées d'un binaire.

3. Dispositif de circuit selon la revendication 1, caractérisé en ce que le générateur de mot (PNG) présente un registre à décalage (SR) avec sept cellules de mémoire (FF₁, ..., FF₇), et en ce que les deux dernières cellules de mémoires (FF6, FF₇), vues dans le sens du décalage, sont connectées en boucle par l'intermédiaire d'une combinaison OU exclusif (EXOR₁) à l'entrée (ESR) du registre à décalage (SR).

4. Dispositif de circuit selon la revendication 1, caractérisé en ce qu'une série de 32 séquences pseudo-aléatoires respectivement décalées de 4 binaires y est produite.

5. Dispositif de circuit selon l'une quelconque des revendications 1 à 4, caractérisé en ce que les éléments de mémoire cadencés (FF₈, ..., FF₃₈) fonctionnent selon le principe PEPS et en ce que pour la production d'une n-ème séquence aléatoire, la séquence (n-m) est écrite dans l'élément de mémoire (FF₁₆, FF₂₄ ; FF₃₁, FF₃₉) d'une profondeur m.

6. Dispositif de circuit selon la revendication 5, caractérisé en ce que les éléments de mémoire (FF₈, ..., FF₃₈) se composent d'une ou de plusieurs bascules bistables placées en série.

7. Dispositif de circuit selon l'une quelconque des revendications 1 à 6, caractérisé en ce que les séquences pseudo-aléatoires sont prélevées aux sorties du générateur de mot (PNG), aux sorties des éléments de combinaison logiques (EXOR₃, ..., EXOR₃₁) et/ou aux sorties des éléments de mémoire (FF₈, ..., FF₃₈) et en ce que ces prélèvements représentent les sorties du dispositif de circuit (SCH).

8. Brouilleur additif parallèle (SCR) avec un dispositif de circuit (SCH) selon l'une quelconque des revendications 1 à 7, caractérisé en ce qu'un flot de données parallèle est haché binaire par binaire en parallèle avec des séquences pseudo-aléatoires de relation de phases différente.
